# EUROPÄISCHE PATENTANMELDUNG

(11) **EP 3 170 431 A1**
(43) Veröffentlichungstag der Anmeldung: **24.05.2017**
(21) Anmeldenummer: 15195752.9
(22) Anmeldetag: 23.11.2015
(51) Int. Cl.: A47J 31/44, A47J 47/16

(54) **HALTER FÜR KAPSELN**

(71) Anmelder: AANDFIT GmbH & Co. KG, 83250 Marquartstein (DE)
(72) Erfinder: Pap, Andrejas, 5310 Mondsee (AT)
(74) Vertreter: Limbeck, Achim

(57) **Zusammenfassung**

Die vorliegende Erfindung betrifft einen Halter(1) für Kapseln (2) mit einem im wesentlichen zylindrischen Kapselkörper (20), welcher eine Substanz zur Zubereitung eines Getränks enthält, wobei der Kapselkörper (20) einen diesen abdeckenden Deckel(21) sowie eine den Deckel(21) umlaufende Schulter (22) und der Halter (1) zumindest einen plattenförmigen Träger (10) mit mindestens einerlänglichen Ausnehmung (11) zur Aufnahme der Kapseln (2) umfasst, wobei die Ausnehmung (11) derart ausgestaltet ist, dass die Schulter (22) die Ausnehmung (11) hintergreift. Der erfindungsgemäße Halterist dadurch gekennzeichnet, dass derplattenförmige Träger (10) zur form schlüssigen Anordnung an der Außenwand (30) einer Getränkekapselmaschine (3) ausgeformt ist und an dem Träger (10) mindestens ein Standfuß (12) vorgesehen ist, welche unter die Getränkekapselmaschine (3) ragt.

## Beschreibung

### Technisches Gebiet

Die vorliegende Erfindung betrifft einen Halter für Kapseln mit einem im Wesentlichen zylindrischen (teils leicht konisch geformten) Kapselkörper, welcher eine Substanz zur Zubereitung eines Getränks enthält, wobei der Kapselkörper einen diesen abdeckenden Deckel sowie eine den Deckel umlaufende Schulter umfasst.

### Stand der Technik

Aus dem Stand der Technik sind Kapselhalter (Kapselspender etc.) bereits in unterschiedlichsten Ausführungsformen bekannt. Gängige Halter umfassen einen plattenförmigen Träger mit länglichen Ausnehmungen zur Aufnahme der Kapseln, wobei die Ausnehmungen derart ausgestaltet sind, dass die Schulter der Deckel die Ausnehmung hintergreift. Durch eine beabstandete Anordnung des Trägers von einer Wand entsteht zwischen den Ausnehmungen und der Wand ein Spalt, welcher ausreichend dimensioniert ist, dass die Schulter die Ausnehmung hintergreift. Dadurch ist sichergestellt, dass die Kapsel innerhalb der Ausnehmung formschlüssig aufgenommen ist.

Bei den herkömmlichen Kapselhaltern ist besonders nachteilig, dass diese stets an der Wand und damit abseits der Getränkekapselmaschine verschraubt oder verklebt werden müssen. Die bekannten Kapselhalter sind damit nicht nur aufwendig zu montieren, sondern durch die Beabstandung zur Getränkemaschine überdies auch umständlich in ihrer Handhabung.

### Darstellung der Erfindung

Der vorliegenden Erfindung liegt die Aufgabe zu Grunde, einen Halter zu schaffen, welcher die vorgenannten Nachteile ausräumt und welcher geeignet ist, auf einfache und komfortable Weise im unmittelbaren Bereich der Getränkekapselmaschine angeordnet zu werden.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Halters sind in den abhängigen Unteransprüchen angegeben.

Gemäß dem Stand der Technik umfasst der erfindungsgemäße Halter zumindest einen plattenförmigen Träger mit mindestens einer länglichen Ausnehmung zur Aufnahme der Kapseln, wobei die Ausnehmung derart ausgestaltet ist, dass die Schulter der Kapseln die Ausnehmung hintergreift.

Erfindungsgemäß ist ein Halter der eingangs genannten Art dadurch gekennzeichnet, dass der plattenförmige Träger zur formschlüssigen Anordnung an der Außenwand einer Getränkekapselmaschine ausgeformt ist und an dem Träger mindestens ein Standfuß vorgesehen ist, welche unter die Getränkekapselmaschine ragt.

Der besondere Vorteil des erfindungsgemäßen Halters ist darin zu sehen, dass er sich durch die besondere Ausgestaltung von Träger und Standfuß an jeglicher Getränkekapselmaschine ohne weiteres nachträglich anordnen lässt. Vorbei sind damit die Zeiten, in denen der Kapselhalter abseits der Getränkekapselmaschine sein Dasein fristete. Mit dem Kapselhalter wird dieser selbst Teil der Getränkekapselmaschine und verwandelt diese (je nach Ausgestaltung) in ein optisches Highlight. Darüber hinaus ist ein aufwendiges Bohren, Schrauben oder Kleben nicht mehr erforderlich.

### Kurzbeschreibung der Zeichnungen

Weitere Ziele, Merkmale, Vorteile und Anwendungsmöglichkeiten des erfindungsgemäßen Halters ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

### In den Zeichnungen zeigen

Fig.1 den erfindungsgemäßen Halter an einer Getränkekapselmaschine;
Fig.2 den Halter in einer Ausführungsform mit zwei Trägern;
Fig.3 den Halter mit zwei Trägern in der Frontansicht.

### Ausführung der Erfindung

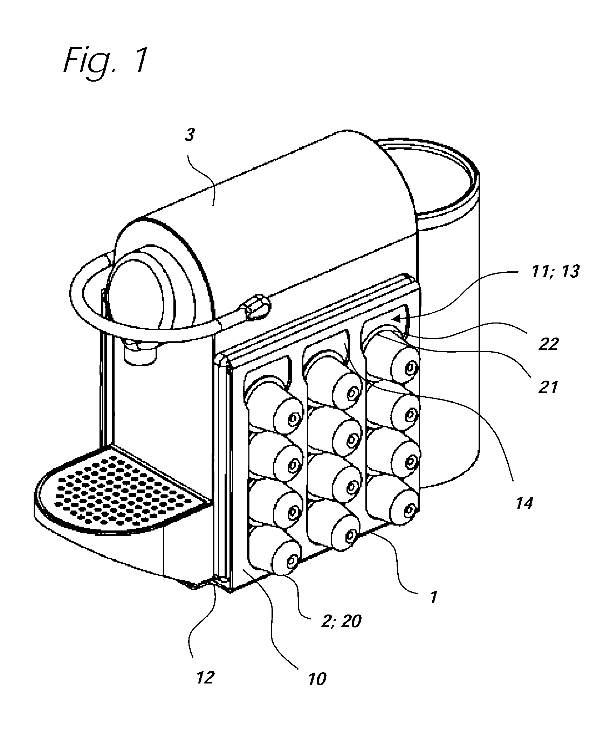

Wie aus Fig.1 ersichtlich, umfasst der erfindungsgemäße Halter 1 in einer bevorzugten Ausführungsform zumindest einen plattenförmigen Träger 10 mit mehreren länglichen Ausnehmungen 11 zur Aufnahme der Kapseln 2, wobei die Anzahl und Höhe der Ausnehmungen vorzugsweise in Abhängigkeit zur Größe der jeweiligen Getränkekapselmaschine 3 steht.

Der plattenförmige Träger 10 ist in der in Fig.1 dargestellten Ausführung zur formschlüssigen Anordnung an der Außenwand 30 einer Kaffeekapselmaschine 3 ausgeformt. Durch das formschlüssige Anliegen des Trägers 10 an der Kaffeekapselmaschine 3 entsteht eine optische Einheit zwischen Halter 1 und Kaffeekapselmaschine 3.

An dem Träger 10 ist vorzugsweise mindestens ein Abstandhalter 16 vorgesehen, mittels dem ein Spalt 14 zur Aufnahme der Schultern 22 zwischen der Außenwand 30 der Kaffeekapselmaschine 3 und den vorderen Rändern 17 der Ausnehmung 11 gebildet wird. Der Abstandhalter 16 ist vorzugsweise entlang der Oberkante des Trägers 10 angeordnet und bildet einen formschlüssigen Abschluss des Trägers 10 zur Außenwand der Kaffeekapselmaschine 3.

In einer weiteren Ausführungsform der Erfindung (nicht dargestellt) können hierzu darüber hinaus beidseitig zur Außenwand 30 der Kaffeekapselmaschine 3 hinweisende Hinterschneidungen vorgesehen sein.

Oberhalb jeder Ausnehmung 11 ist vorzugsweise eine Öffnung 13 vorgesehen, welche so dimensioniert ist, dass die Schulter 22 des Deckels 21 der Kapsel 2 in diese Öffnung 13 und so in den Spalt 14 hinter der Ausnehmung 11 eingeführt werden kann.

Unterhalb der Kaffeekapselmaschine 3 ist an dem Träger 10 ein Standfuß 12 derart angeordnet, dass der Halter 1 durch die Kaffeekapselmaschine 3 gehalten wird.

Der Standfuß 12 ist in der dargestellten Ausführungsform als im Wesentlichen ebene Bodenplatte 12 ausgeformt, welche flächig unterhalb der Kaffeekapselmaschine 3 platziert ist.

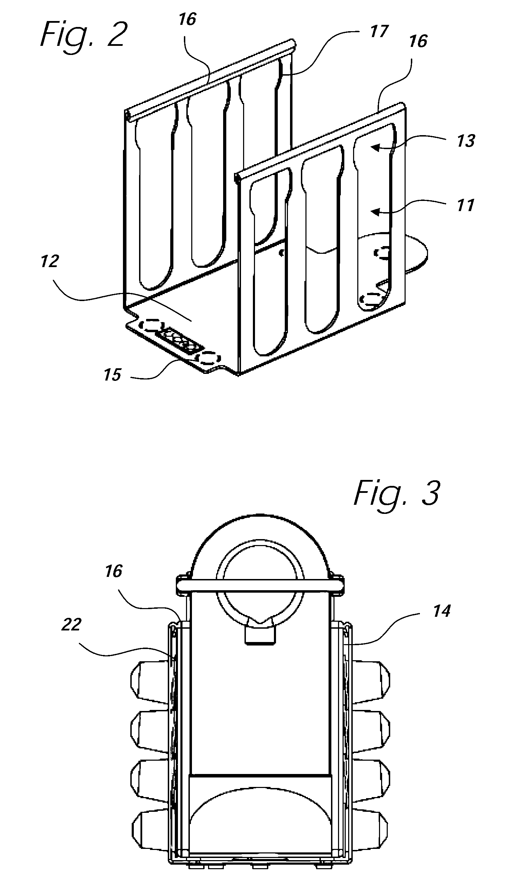

In einer ganz besonders vorteilhaften Ausführungsform der Erfindung ist - wie aus den Fign. 2 und 3 ersichtlich - an dem vorzugsweise als Bodenplatte 12 ausgestalteten Standfuß 12 beidseitig einer Getränkekapselmaschine 3 jeweils mindestens ein Träger 10 vorgesehen (siehe Fign.2 und 3). Der Halter 1 umfasst in der in den Fign. 2 und 3 dargestellten Ausführung die Kaffeekapselmaschine 3 von beiden Seiten, was einerseits die Anzahl der zur Verfügung stehenden Ausnehmungen 11 als auch den optischen Gesamteindruck der beiden Einrichtungen 1,3 verbessert.

Wie aus Fig.2 ersichtlich, sind in der Bodenplatte 12 Ausnehmungen 15 vorgesehen, in welche die Standfüße der Kaffeekapselmaschine 3 hineinragen.

Der erfindungsgemäße Halter 1 ist vorzugsweise aus Metall (bspw. Edelstahl), Aluminium oder aus Kunststoff gefertigt. Allerdings können je nach Anforderung darüber hinaus auch sämtliche anderen, denkbaren Materialien wie Holz, Glas oder dergleichen geeignete, feste Materialien verwendet werden.

Der oder die Träger 10 können auch zumindest bereichsweise elastisch ausgestaltet sein, vorzugsweise in der Form, dass diese eine nach innen gerichtete Vorspannung in der Form aufweisen, dass gewährleistet ist, dass diese sich optimal an die Kaffeekapselmaschine 3 anfügen.

In einer nicht dargestellten Ausführungsform kann der Halter 1 bzw. die seitlichen Träger 10 die Getränkekapselmaschine 3 selbstverständlich auch seitlich oder nach oben überragen. In dieser Ausführung sollte sicher gestellt sein, dass eine einen Spalt bildende Rückwand außerhalb des Bereichs der Getränkekapselmaschine 3 vorgesehen ist, damit die Kapseln 2 auch in diesem Bereich ausreichend gehalten werden können.

Der Formgebung des erfindungsgemäßen Halters 1 sind erfindungsgemäß keine Grenzen gesetzt. Vorteilhaft sind der Halter 1 bzw. der oder die Träger 10 und der Stanfuß 12 in Form- und Farbgestaltung der jeweiligen Getränkekapselmaschine 3 entsprechend angepasst.

Das erfindungsgemäße Halters 1 beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Halter
- 2: Kapseln
- 3: Getränkekapselmaschine (Kaffeekapselmaschine)
- 10: Träger
- 11: Ausnehmungen im Träger
- 12: Standfuß (Bodenplatte)
- 13: Öffnung
- 14: Spalt
- 15: Ausnehmungen in dem Standfuß
- 16: Hinterschneidungen
- 17: Ränder der Ausnehmungen
- 20: Kapselkörper
- 21: Deckel
- 22: Schultern
- 30: Außenwand

## Patentansprüche

1. Halter (1) für Kapseln (2) mit einem im wesentlichen zylindrischen Kapselkörper (20), welcher eine Substanz zur Zubereitung eines Getränks enthält, wobei der Kapselkörper (20) einen diesen abdeckenden Deckel (21) sowie eine den Deckel (21) umlaufende Schulter (22) und der Halter (1) zumindest einen plattenförmigen Träger (10) mit mindestens einer länglichen Ausnehmung (11) zur Aufnahme der Kapseln (2) umfasst, wobei die Ausnehmung (11) derart ausgestaltet ist, dass die Schulter (22) die Ausnehmung (11) hintergreift,
**dadurch gekennzeichnet, dass**
der plattenförmige Träger (10) zur formschlüssigen Anordnung an der Außenwand (30) einer Getränkekapselmaschine (3) ausgeformt ist und an dem Träger (10) mindestens ein Standfuß (12) vorgesehen ist, welcher unter die Getränkekapselmaschine (3) ragt.

2. Halter (1) nach Anspruch 1,
**dadurch gekennzeichnet, dass**
an dem Träger (10) mindestens ein Abstandhalter (16) vorgesehen ist, mittels dem ein Spalt (14) zur Aufnahme der Schultern (22) zwischen der Außenwand (30) der Getränkekapselmaschine (3) und den vorderen Rändern (17) der Ausnehmung (11) gebildet wird.

3. Halter (1) nach Anspruch 2,
**dadurch gekennzeichnet, dass**
der Abstandhalter (16) entlang der Oberkante des Trägers (10) angeordnet ist und einen formschlüssigen Abschluss des Trägers (10) zur Außenwand der Getränkekapselmaschine (3) bildet.

4. Halter (1) nach Anspruch 1,
**dadurch gekennzeichnet, dass**
an der mindestens einen Ausnehmung (11) beidseitig und zur Außenwand (30) der Getränkekapselmaschine (3) hinweisende Hinterschneidungen vorgesehen sind, welche beidseitig einen Spalt (14) zur Aufnahme der Schultern (22) zwischen der Außenwand (30) der Getränkekapselmaschine (3) und den vorderen Rändern (17) der Ausnehmung (11) bilden.

5. Halter (1) nach einem der vorangegangenen Ansprüche,
**dadurch gekennzeichnet, dass**
an dem Standfuß (12) beidseitig der Getränkekapselmaschine (3) jeweils mindestens ein Träger (10) vorgesehen ist.

6. Halter (1) nach einem der vorangegangenen Ansprüche,
**dadurch gekennzeichnet, dass**
in der Bodenplatte (12) Ausnehmungen (15) vorgesehen sind, in welche die Standfüße der Getränkekapselmaschine (3) hineinragen.
